# EUROPEAN PATENT SPECIFICATION

(11) **EP 4 544 440 B1**
(45) Date of publication and mention of the grant of the patent: **25.11.2026**
(21) Application number: 22834564.1
(22) Date of filing: 08.12.2022
(51) Int. Cl.: G06F 21/74, G06F 21/60, G06F 21/62, H04L 9/08, G06F 21/64, H04L 9/06, H04L 9/32

(54) **MANAGING AUTHORISATIONS FOR LOCAL OBJECT SHARING AND INTEGRITY PROTECTION**
VERWALTUNG VON BERECHTIGUNGEN ZUR GEMEINSAMEN NUTZUNG LOKALER OBJEKTE UND ZUM INTEGRITÄTSSCHUTZ
GESTION D'AUTORISATIONS POUR UN PARTAGE D'OBJET LOCAL ET UNE PROTECTION D'INTÉGRITÉ

(43) Date of publication of application: 30.04.2025
(73) Proprietor: Huawei Technologies Co., Ltd., Shenzhen, Guangdong 518129 (CN)
(72) Inventor: LI, Qiming, 16440 Kista (SE)
(74) Representative: Thun, Clemens
(86) International application number: PCT/EP2022/084982
(87) International publication number: WO 2024/120636

(56) References cited:
- CN-A- 113 190 831
- US-A1- 2020 175 208
- US-A1- 2021 200 882
- ANONYMOUS: "Hardware-backed Keystore", 13 September 2022 (2022-09-13), pages 1 - 12, XP093049356, Retrieved from the Internet <URL:https://source.android.com/docs/security/features/keystore> [retrieved on 20230524]

## Description

### TECHNICAL FIELD

The present disclosure relates, in general, to managing authorisations. Aspects relate to managing authorisations for use of shared objects in host devices.

### BACKGROUND

Cryptographic keys and digital certificates are often used for authentication and authorization purposes in a multitude of different ways in devices, such as electronic devices, such as smart phones, tablet computers, laptop computers and so on. For example, a payment application hosted on a smart phone can generate a transaction signing key and enroll a certificate for the signing key from a payment service provider. During an actual payment transaction, the key is used by the application to sign the transaction data, and the signed transaction together with the certificate would be validated by the payment service provider for the transaction to be effective.

Another example is when an employee uses a smart phone or a tablet computer in an enterprise setting. The employee may need to register the device with the employer and can receive both a key and a certificate as part of the registration process, which can then be used by the device to authenticate itself to a company network for example. The key may be further encrypted by a password, which may also be given to the employee during the registration process.

In general, cryptographic keys are generated by a protected key management component of a device or imported to such a key management component by an end user. A digital certificate associated with the key is then issued by a service provider, such that the key and the certificate can be used to access protected resources provided by the service provider.

Difficulties may arise, when the application that generates or imports the key is different from the application that uses it. To prevent the key being abused by unauthorized applications on the same device, a common approach is to record authorization information explicitly in a database stored on the same device. In this case, when an application requests use of a key, the device would consult the database to see if the application is authorized to use the key before the access is granted. Such authorization database and the logic to record and query the database are often part of a complete key management subsystem on the device, but it is also possible that the authorization is provided by a separate component. The authorization process usually also involves actions from the end-user. Hence it is common that the device provides a user interface for end users to manage such authorizations, such as viewing existing authorizations and revoking such authorizations.

US2021/200882 A1 discloses an electronic device including a Trusted Execution Environment (TEE), a Rich Execution Environment (REE), and a hardware-based secure sub-system which includes a cryptographic engine. The REE includes a cryptographic driver configured to initiate a request for TEE authorization to perform a particular cryptographic operation by the cryptographic engine on a data-item that is stored in a memory region that is accessible by the REE. The TEE includes a policies manager to determine whether the request from the REE is approved or rejected, and if approved, to inject data-items into the secure sub-system to enable performance of the requested cryptographic operation by the cryptographic engine.

### SUMMARY

An objective of the present disclosure is to provide a method to authorize object usage among multiple different applications on the same device without recourse to an authorization database.

The foregoing and other objectives are achieved by the features of the independent claims.

Further implementation forms are apparent from the dependent claims, the description and the Figures.

A first aspect of the present disclosure provides an apparatus for managing authorisation for use of a shared object in a host device, the apparatus comprising a processor, an authorisation module coupled to the processor and defining an interface to a protected execution environment of the host device, a memory coupled to the processor, the memory configured to store program code executable by the processor, the program code comprising one or more instructions, whereby to cause the apparatus to receive a request to use a shared object from a requesting application of the host device, the requesting application operating outside of the protected execution environment, generate, using the authorisation module, an object identifier on the basis of a selected shared object and defining a tuple comprising data identifying the selected shared object, the requesting application, a root application, a user of the host device, and a first object type identifier, wherein the root application is an application operating outside of the protected execution environment and that imports or generates the shared object, generate, using the object identifier, a cryptographic authorisation key within the protected execution environment, generate, on the basis of the cryptographic authorisation key and the object identifier, a message authentication code key within the protected execution environment, and generate, using the authorisation module, an authorisation identifier defining a tuple comprising data identifying the selected shared object, the root application, a user of the host device, and the message authentication code key, and send, using the authorisation module, the authorisation identifier back to the requesting application.

Accordingly, objects, such as cryptographic keys for example, can be used and/or shared amongst different applications executing on the same apparatus without the need for an authorization database. This significantly reduces the attack surface in a less secure region of the apparatus, and ensures security against rollback attacks as the underlying key management component is secure.

In an implementation of the first aspect, the program code can comprise one or more further instructions, whereby to cause the apparatus to generate, using the authorisation module, an access identifier comprising data identifying the selected shared object, the requesting application, the root application, the user of the host device, and a second type identifier. The program code can comprise one or more further instructions, whereby to cause the apparatus to generate, using the authorisation module, a set of shared objects in response to the request to use the shared object from the requesting application. The program code can comprise one or more further instructions, whereby to cause the apparatus to filter the set of shared objects to generate a sub-set of objects representing a list of sharable objects. The program code can comprise one or more further instructions, whereby to cause the apparatus to prompt the user of the host device to select a shared object from the list of sharable objects, and receive an input representing the selected shared object.

In an example, the program code can comprise one or more further instructions, whereby to cause the apparatus to receive a request to perform an operation using the selected shared object, execute the operation within the protected execution environment using the selected shared object, and return data representing a result of the executed operation to the requesting application of the host device. The program code can comprise one or more further instructions, whereby to cause the apparatus to decode, using the authorisation module, the authorisation identifier, whereby to generate decoded data, and within the protected execution environment, use the decoded data to validate the message authentication code. The program code can comprise one or more further instructions, whereby to cause the apparatus to receive data representing a request for revocation of an authorisation for the selected shared object, and remove, within the protected execution environment, the cryptographic authorisation key associated with the selected shared object.

A second aspect of the present disclosure provides a machine-readable storage medium according to claim 9.

In the context of secure authorization of shared objects (such as keys and certificates) among different applications hosted on the same apparatus, such as a consumer device for example, where a protected key management component (a key manager) is available, no authorization database is used, hence significantly reducing the attack surface.

A third aspect of the present disclosure provides a method for managing authorisation for use of a shared object in a host device according to claim 12.

These and other aspects of the invention will be apparent from the embodiment(s) described below.

### BRIEF DESCRIPTION OF THE DRAWINGS

In order that the present disclosure may be more readily understood, embodiments will now be described, by way of example, with reference to the accompanying drawings, in which:
Figure 1 is a schematic representation of an apparatus;
Figure 2 is a schematic representation of an apparatus according to an example;
Figure 3 is a schematic representation of an authorization process according to an example;
Figure 4 is a schematic representation of a usage process according to an example;
Figure 5 is a schematic representation of a listing and revocation process according to an example;
Figure 6 is a schematic representation of a machine according to an example; and
Figure 7 is a flowchart of a method according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

To reduce the attack surface and to minimize risks of vulnerabilities caused by software bugs in a security mechanism used for the authorization of a key, a protected key management component of an apparatus, such a consumer or enterprise device, can be made as small and simple as possible and can be hosted in a more secure region on the device with limited computation resources. As a result, any database that is used to store authorization information will be hosted outside of the secure region, and is thus more prone to attacks.

For example, an attacker may exploit a vulnerability in the less secure region of the device to obtain access to the database and directly modify authorization information contained therein. If direct modifications are not possible, an attacker may try to replace the database with an older version, which may contain an authorization that has been, e.g., revoked by the user, and exploit such revoked authorizations. The latter case is often referred to as a rollback attack.

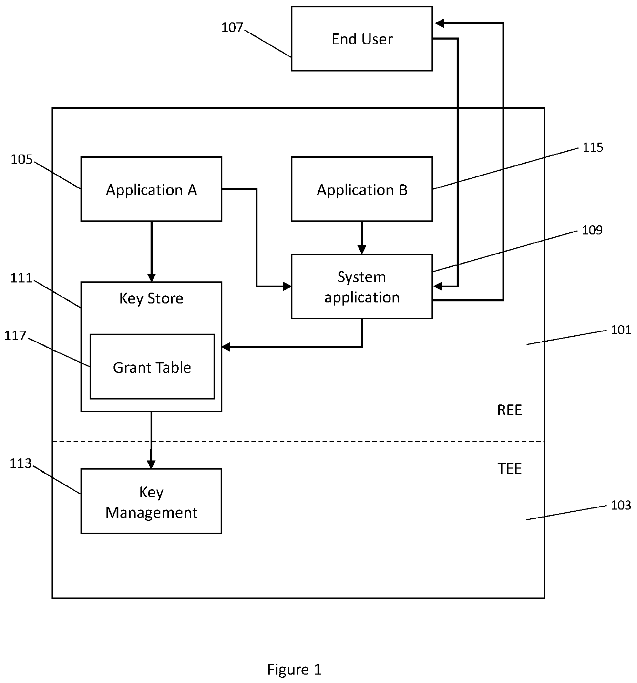

Figure 1 is a schematic representation of an apparatus. The apparatus of figure 1 comprises two software environments - a Rich Execution Environment (REE) 101, which is a relatively less secure region, and a protected execution environment, such as a Trusted Execution Environment (TEE) 103, which is as relatively more secure region for the apparatus. Note that, instead of having TEE/REE regions, a separate security chip can be provided instead, thereby providing a protected region for the apparatus. The protected execution environment 103 can be implemented as, e.g., a secure area of a processor, such that data that resides therein and instructions that are executed in this part of the processor are confidential and have their integrity protected such that unauthorized access and/or modification is prevented. For example, an application executing in a non-trusted execution environment such as the rich execution environment (or generally, any execution environment other than the protected environment) will not have access to data within the protected execution environment 103 such that it is unable to access, modify or replace that data unless specifically authorized to do so. The protected execution environment 103 can comprise a hardware isolation mechanism as well as a secure operating system. Accordingly, a protected execution environment implies a higher level of trust in validity, isolation and access control in objects (assets) stored or executing in this space when compared to more general-purpose software environments (such as the REE 101). Typically, a main operating system and applications for the apparatus execute in the REE 101. Each apparatus vendor may provide another secure operating system and/or trusted applications that execute in the TEE 103. A key store 105 provide a key management component, which can be internally backed by a trusted application, such as the Android KeyMaster application for example, that executes in the TEE 103.

Referring to figure 1, a first application 105 (Application A - e.g., a browser) may prompt an end user 107 to import a key (or it generates a key itself) and an associated certificate by utilizing a user interface provided by a system application 109 (e.g., a Settings application of the apparatus). The system application 109 can import the key and certificate to the Key Store 111. In the example of figure 1, keys and certificates managed by the Key Store 111 are protected by a key management module 113 in the TEE 103.

When a second application 115 (Application B) executes, it may request, via the system application 109, use of the sharable key and certificate that was generated or imported by the end user 107. The system application 109 gathers a list of all usable keys and certificates and presents it to the end user 107. After a selection is made by the end user 107 via a system user interface, an authorization to allow the second application 115 to use the selected key is recorded in a Grant Table 117 of the key store 111. The second application 115 receives a confirmation of the authorization, which indicates the name (sometimes referred to as a key alias) of the key, such that it can use the key by giving the name to the key store 111. The key store 111 checks against the current grant table 117 to determine if the key usage is allowed. If the checks are passed, the key management module 1163 is instructed to perform the actual cryptographic operation requested by the second application 115.

Typically, the end user 107 may open the system user interface (e.g., Settings) to view current authorizations and revoke them. Such revocation operations are processed by the key store module 111, resulting in an updated grant table 117 with the corresponding entries removed. Hence, if the second application 115 attempts to use the same key after its access has been revoked, the request would be denied.

However, as noted above, the use of a database such as the grant table 117 increases the attack surface, since the database may be modified directly by an attacker. If a previously granted authorization is later revoked, the attacker may also rollback the database file to an earlier version to regain the revoked authorization. Such attacks are difficult to mitigate due to the fact that the database (e.g., grant table 117) resides in the REE 101, which is less secure. Even if the grant table 117 were moved from the REE 101 to the TEE 103, after which the database is better protected, the system may still suffer from a larger attack surface due to the increased complexity and chances of software bugs in the TEE 103.

According to an example, there is provided a mechanism to authorize key usages among different applications on the same apparatus without the need for an authorization database. This significantly reduces the attack surface in a less secure region of the apparatus, and ensures security against rollback attacks if the underlying key management component is secure. Accordingly, in the context of secure authorization of shared objects or assets (such as keys and certificates) among different applications hosted on the same apparatus, such as a consumer device for example, where a protected key management component (a key manager) is available, no authorization database is used, hence significantly reducing the attack surface. In the present context, an object, such as a shared object, comprises an asset (such as a data asset) that can be in the form of, e.g., a secret that can be used to maintain a private information link between two parties or applications (e.g., such as a cryptographic authorization key) that share the object in question. In an example, a shared object defining a key such as a cryptographic authorization key can comprise data used to encode and/or decode some other data, and which may be used as part of a symmetric or asymmetric cryptographic protocol. In an example, a shared object defining a key such as a cryptographic authorization key can comprise an alphanumeric string.

An object, such as a shared object can comprise an asset that can be used to attest to the validity of something. For example, a shared object can comprise a digital certificate that attests to the validity of another shared asset in the form of a cryptographic authorization key. In other examples, an object can comprise a digital signature, or a root certificate, or some other form of certificate.

Although the disclosure herein relates to key sharing and authorization, it can equally be used to authorize access to any computing resource. Furthermore, it may be used in other scenarios such as integrity protection for example.

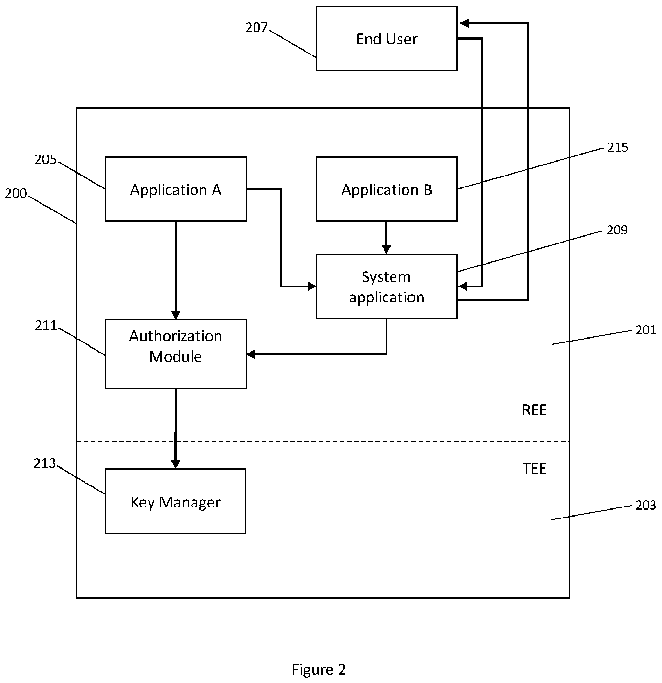

Figure 2 is a schematic representation of an apparatus according to an example. Apparatus 200 can be used to manage authorisation for use of a shared object in a host device, such as a consumer device where multiple applications are hosted and there is a need to share protected resources such as keys and certificates among them, and there is a protected key management component 213 (key manager). Apparatus 200 can be divided into two regions, similarly to that described above with reference to figure 1. A relatively more secure region 203 (TEE) and a relatively less secure region 201 (REE), which is used to execute, e.g., operating systems and applications for the apparatus 200.

A key manager 213 comprises, in an example, a component that is at least partly hosted in the secure region 203 (TEE) of the apparatus 200 and is responsible for providing secure key management services, including the generation, import, deletion, listing of cryptographic keys and certificates, and allowing applications to use the protected keys to perform cryptographic operations such as providing digital signatures and performing encryption operations. In an example, the key manager 213 is able identify a caller application during these operations, and can use an access control rule such that, e.g., only the owner of the keys and certificates (i.e., the application that generated or imported them) can access these objects.

A system application 209 comprises an application hosted in the REE 201 that is responsible for user interaction and providing APIs for applications to indirectly interact with an end user 207 for credential import, authorization and revocation.

An authorization module 211 comprises a system service hosted in the REE 201 and is responsible for the authorization and revocation of shared accesses. Furthermore, in an example, the authorization module 211 can provide APIs for applications to use shared objects. In an example, the authorization module 211 defines an interface to the protected execution environment 203 of the host device.

An owner or root application, which is hosted in the REE 201, is an application that imports or generates a sharable cryptographic key or keys and enrolls or imports one or more certificates associated with the key(s).

A client or requesting application, hosted in the REE 201, is an application that wishes to use such a shared key and certificate.

One or more end users 207, who are the actual users of the apparatus 200. Many consumer devices are primarily used by one person, but multi-user support is also common.

With reference to figure 2, cryptographic keys are used as an example of sharable objects. Authorizations, for example, can be performed on other types of sharable objects. Authorization module 211 manages all the authorizations of sharable objects without using a grant table or any other type of file storage in REE 201.

According to an example, each key is identified by a uniform resource identifier (URI) that is unique for all keys and all applications on the same apparatus. For example, for end user 207 (e.g., ID 100), who can be an end user of the host device that comprises the apparatus 200 for example, and application A 205 (e.g., ID 500) and a key named KeyA, an object identifier in the form of an Object URI can be constructed to identify this key as follows:
au:t=ak;o=KeyA;u=100;a=500

A detailed definition of the URI format will be described below, however at this point it suffices to highlight that the Object URI that defines the object identifier for this example contains the type of the object (t=ak), the name of the object (o=KeyA), the user ID and the application ID. That is, the object identifier in the form of an Object URI comprises a tuple (i.e., as list of elements or data) enabling identification of a key, such as a cryptographic key.

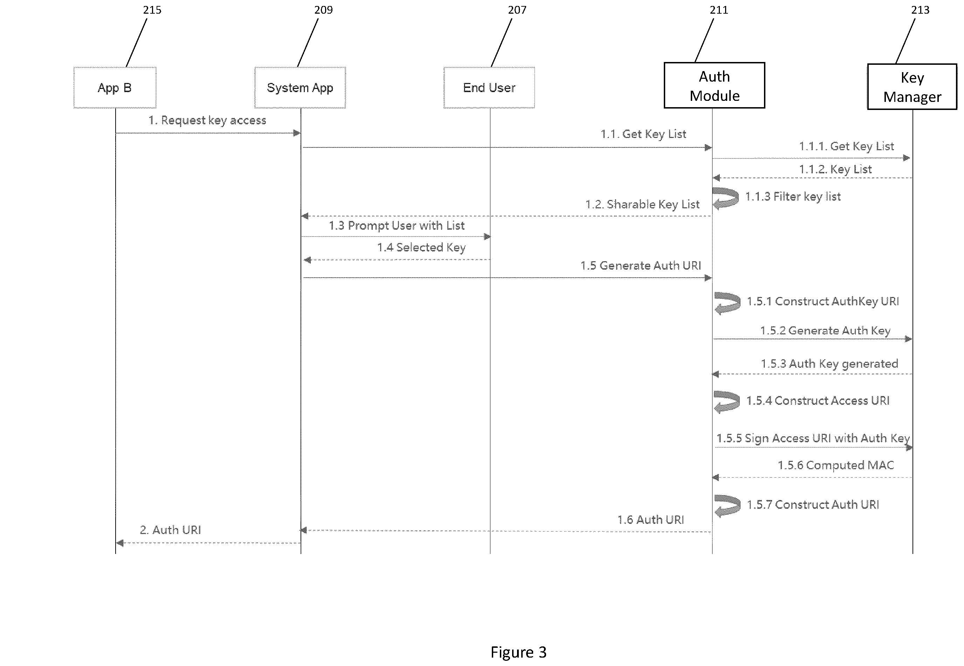

With reference to figure 3, which is a schematic representation of an authorization process according to an example, when the application A 205 (ID 500) prompts the end user 207, via the system application 209 for example, which can be a settings component of the apparatus 200, to import/generate a key, a name is given by the end user (KeyA), and the system application instructs the authorization module 211 to import/generate a key on behalf of the application. Internally, the authorization module 211 can construct an Object URI as above and use this URI to import or generate the key at the key manager 213. From the perspective of the key manager 213, the owner of the key is the authorization module 211, which is the caller for the key import/generation API at the key manager 213, and the Object URI is the identifier of the key known to the key manager 213.

At a later time, another application B 215, with ID 600, may wish to use one of the sharable keys in the apparatus and thus requests authorization to do so. In this case, the application B 215 would request key access (1) via the system application 209. The system application 209 can then prompt the end user 207 to select a key to use. The list of such sharable keys is, in an example, obtained from the authorization module 211 (1.1/1.2), which would in turn query the key manager 213 for currently available keys (1.1.1/1.1.2) and construct a list of sharable keys by filtering out non-sharable keys intended for internal use by the authorization module 211 (1.1.3).

The list would then be presented to the end user 207 (1.3). After the end user 207 selects a key (e.g., KeyA) to be used by application B 215 (1.4), the system application 209 can instruct the authorization module 211 to generate an Auth URI for this authorization. The authorization module 211 can computes the Auth URI as follows:
In 1.5.1 the authorization module 211 constructs an AuthKey URI using the information from the Object URI and the information about the client application B 215, given by the system application 209. An example of the AuthKey URI is:
au:t=m;o=KeyA;u=100;a=500?ca=600

Note that the type (t=m) clearly differentiates the AuthKey from a normal application key (t=ak), and the URI includes the information about the client application A in addition to the information about the key itself. The example here shows an authorization to a client application under the same user. If the target is a different end user (say, ID 200) for a multi-user device, the URI will also contain the information about the client user ID as well. In this case, the AuthKey URI would be:
au:t=m;o=KeyA;u=100;a=500?ca=600;cu=200

In 1.5.2/1.5.3 the authorization module 211 uses the AuthKey URI as the identifier to generate a new key at the key manager 213, such as a cryptographic authorization key. The usage specification of the key can be either for, e.g., digital signatures or message authentication codes (MAC). Since MAC is typically faster than digital signature, a MAC algorithm such as HMAC can be used. A MAC typically comprises data that can be used to authenticate a message. That is, a MAC comprises data that can be used to attest to the fact that a message originating from a specific sender for example has not been modified, thereby protecting the messages integrity and enabling the messages authenticity to be verified.

HMAC (hash-based message authentication code) is a specific type of MAC that utilizes a cryptographic hash function (a one-way function used to map input data of any size in the form of a message to output data in the form of a message digest of fixed size) and a symmetric cryptographic authorization key to verify data integrity and/or authenticity of a message.

In 1.5.4 the authorization module 211 constructs an access identifier in the form of Access URI, which contains the same information as in the AuthKey URI, except that the object type matches the actual type of the object (in this case, the application key KeyA). An example of the Access URI is as follows:
au:t=ak;o=KeyA;u=100;a=500?ca=600

In 1.5.5/1.5.6 the authorization module 211 further instructs the key manager to compute a message authentication code (MAC), using the Access URI constructed above as the message, and the AuthKey generated previously as the secret key. That is: $MAC = HMAC \left(AuthKey, \left〈Access URI\right〉\right)$

Where <Access URI> refers to the Access URI described above as in the input message to the HMAC algorithm. Accordingly, on the basis of the cryptographic authorisation key and the object identifier, a message authentication code key is generated within the protected execution environment 203.

In 1.5.7 the authorization module 211 constructs an authorisation identifier in the form of an Auth URI by combining the information about the object and the computed MAC. An example is as follows:
au:t=ak;o=KeyA;u=100;a=500?m=<MAC>

Where <MAC> refers to a textual representation of the computed MAC. Note that information about the client application and client user could be included in this URI.

After the Auth URI has been generated, the client application B 215 receives the Auth URI via the system application 209 (2). Following this, application B 215 can use the key KeyB with the Auth URI. Once such Auth URI is revoked, application B 215 will no longer be able to use this key.

As mentioned, after application B 215 has an Auth URI, it can use it to use the shared key to perform cryptographic operations. The use of the key has to be granted by the authorization module 211 before being actually fulfilled by the underlying key manager 213.

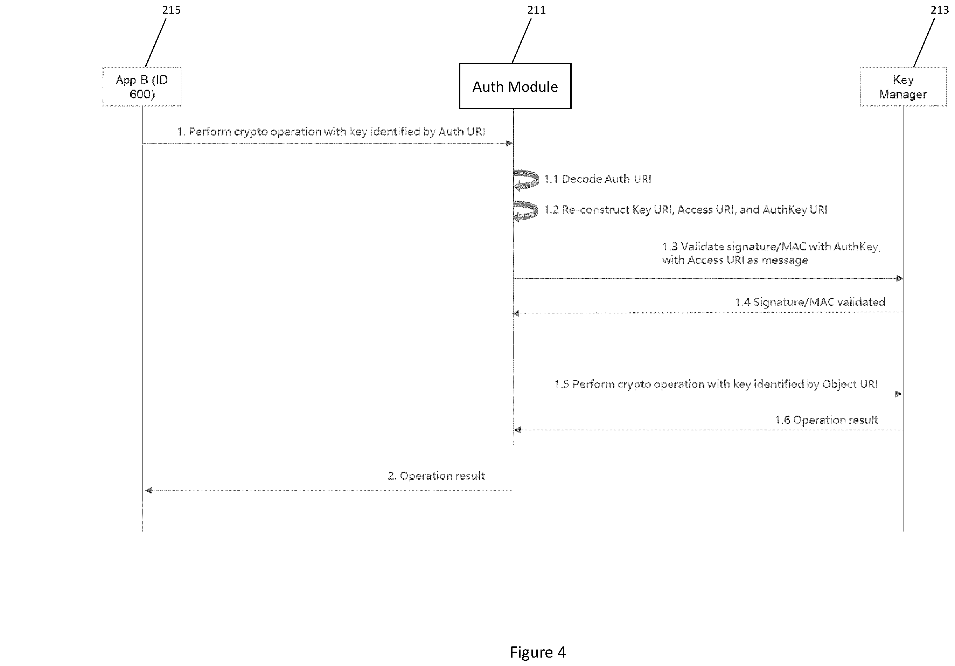

Figure 4 is a schematic representation of a usage process according to an example. In the example of figure 4, application B 215 sends a request to perform a cryptographic operation (such as digital signature), with an Auth URI as the input (1). The Auth URI as described above can be, for example:
au:t=ak;o=KeyA;u=100;a=500?m=<MAC>

The Auth URI is parsed by the authorization module 211 to obtain the object type (t=ak), the object name (o=KeyA), the owner user ID (u=100), the owner application ID (a=500), and the MAC computed during authorization (1.1 figure 3). From such information the authorization module 211 can compute the Object URI as follows:
au:t=ak;o=KeyA;u=100;a=500

The authorization module 211 can further obtain information about the caller application (application B 215) from the apparatus 200 and learn that the ID of the caller application is 600, and that the current user is the same as the one who generated or imported the key. Then, an Access URI can be constructed as follows:
au:t=ak;o=KeyA;u=100;a=500?ca=600

Note that this is the same as the Access URI computed during the authorization. Finally, the authorization module 211 computes an AuthKey URI that identifies the key for the MAC computation as follows:
au:t=m;o=KeyA;u=100;a=500?ca=600

After these three URIs are computed (1.2), the authorization module 211 sends a request (1.3) to the underlying key manager 213 to validate the decoded MAC value against a key identified by the AuthKey URI, where the message is the Access URI. The key manager 213 validates the MAC by re-computing the MAC for the given message with the specified key, and comparing it with the input MAC (1.4). According to an example, the MAC validation will only be successful if the following conditions hold:
Condition 1. The application key being used (KeyA owned by application A 205 (ID 500) and user 207 (ID 100) matches the key that was authorized, and the client application B 215 (ID 600) matches the target client application during authorization. Otherwise, the URIs would be constructed wrong and the MAC validation would fail.
Condition 2. The AuthKey identified by the AuthKey URI has not been removed or changed after the authorization has been given to application B (i.e., after the Auth URI has been computed as described above). Otherwise, the MAC validation would fail.

The first condition shows that the authorization information was correct, and the second condition shows that the authorization has not been revoked. Only when both conditions were met would the authorization module 211 continue to perform the actual cryptographic operation with the key manager 213 (1.5). The result of the cryptographic operation is then returned to the application (1.6 and 2).

Although cryptographic keys are used as an example, other types of object or resource access can be checked in the same way. The only difference would be to replace 1.5 and 1.6 of figure 4 with actions that are required to access the actual object or resource.

A listing of current authorization information can be provided to the end user by the system application 209 so that the end user is aware of the authorizations and can revoke selected authorizations when needed. In other systems such a listing can be generated simply by querying a local grant table database. However, since there is no such grant table, the listing can be constructed using the key manager 213.

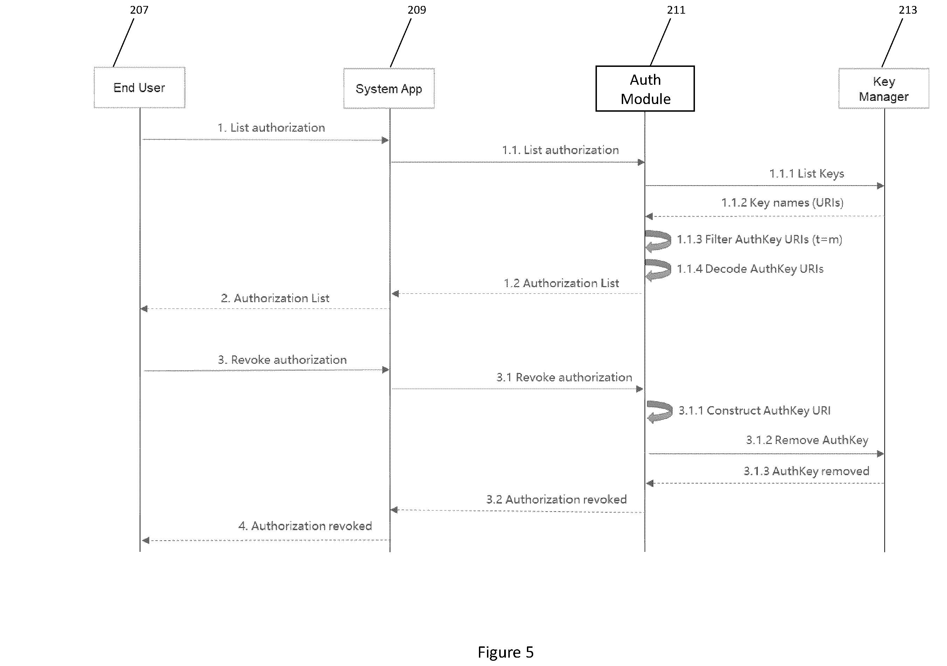

Figure 5 is a schematic representation of a list5ing and revocation process according to an example. In the example of figure 5, an end user 207 launches the system application 209 (e.g., Settings) to obtain a list of authorizations (1). The system application 209 then sends a listing request to the authorization module 211 (1.1). The authorization module 211 relies on the underlying key manager 213 to list all current keys owned by the authorization module 211 (1.1.1), and obtains a list of key names, which are URIs (1.1.2). The list of URIs is filtered to determine the AuthKeys by checking that the object type is the type for AuthKeys (1.1.3). These AuthKey URIs are then further decoded to obtain the list of authorizations (1.1.4). The authorization list is then returned to the system application 209 (1.2), and presented to the end user (2).

After the end user reviews the current authorization list, they may send a request to the system application to revoke one or more authorizations (3). The system application 209 forwards the request to authorization module 211 (3.1). The actual parameters used for this request is implementation dependent, but in an example it can comprise at least one of the Object URI, which identifies the key, and the identifier of the client application and/or client user that was previously given the authorization. With this information, the authorization module 211 can reconstruct the AuthKey URI (3.1.1). If the AuthKey URI was already given to the system application 209 as part of the authorization listing result (1.2), the system application 209 may also choose to use the AuthKey URI directly for the revocation, and in this case the reconstruction of the AuthKey URI may not be needed. In either case, the revocation is done by removing the AuthKey identified by the AuthKey URI at the key manager (3.1.2).

Since validation of the authorization in the form of an Auth URI involves checking the MAC value against a key identified by the AuthKey URI, if the key is removed because of revocation, the MAC validation would fail. If an authorization is first revoked and later granted again, the AuthKey would be different even if the AuthKey URI remains the same. In this case, the client application must use the updated Auth URI generated during the second authorization to use the key, since the validation of the MAC in the first authorization would also fail.

Accordingly, if the underlying key manager is rollback-safe in the sense that an attacker is not able to recover a removed key, then the authorization method described above is also rollback-safe and the attacker would not be able to use a revoked Auth URI. Furthermore, note that the authorization listing and revocation can happen without the end user. For example, if a shared key (KeyA) is removed, either by the owner application or by a system application, the removal would be done via an API provided by the authorization manager, since the authorization manager is the owner of all such shared keys from the perspective of the key manager. In this case, the authorization manager can generate a listing of all authorizations with respect to the key to be removed and revoke all such authorizations before proceeding to remove the shared key. This is to avoid having too many dangling AuthKeys, which is waste of system resources and may lead to certain types of denial of service attacks.

According to an example, URIs used herein as examples follow the specification in Augmented Backus-Naur Form (ABNF) below (in which text on a line after a semi-colon denotes a comment not forming part of the specification proper):

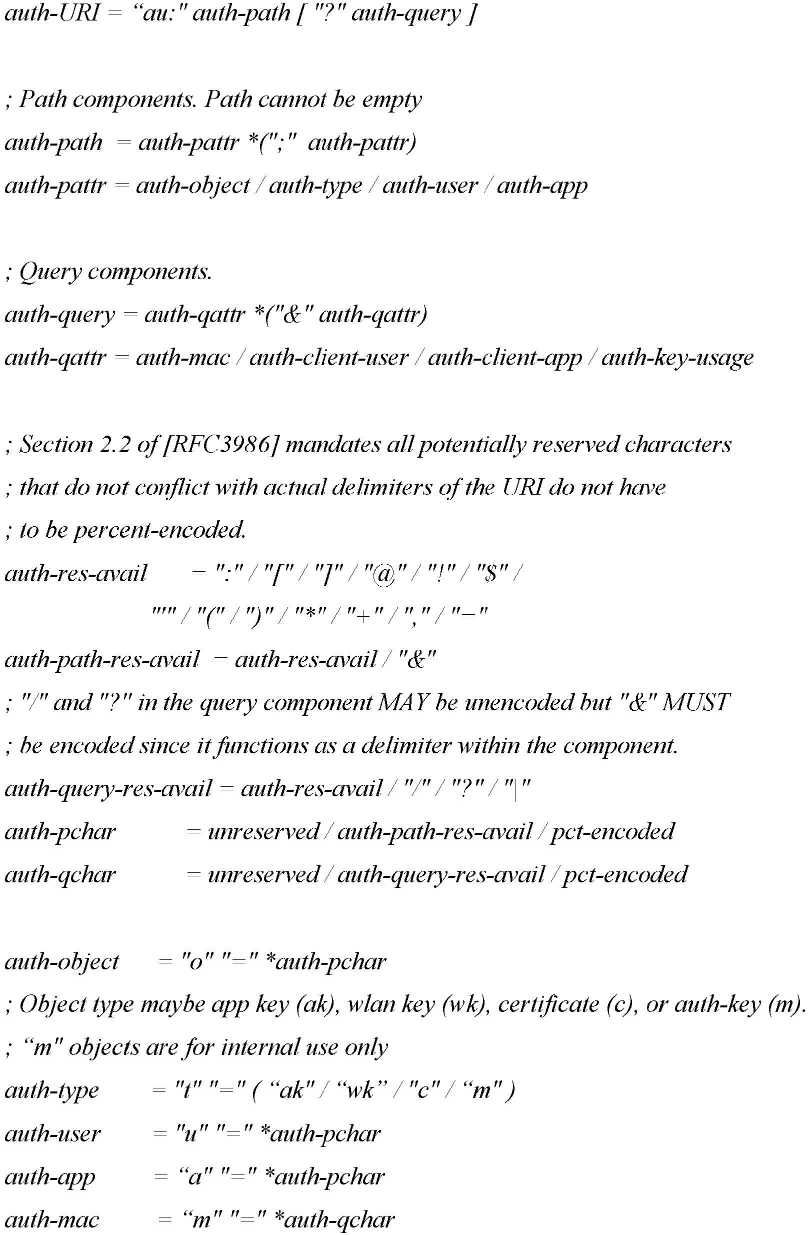

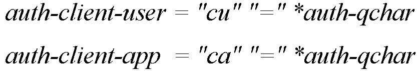

However, the above specification is by no means rigid or fixed. Instead, such a scheme can be adapted to desired use cases by adding or removing more attributes to the URI, providing that the Object URI, Access URI, AuthKey URI and Auth URI can be constructed or computed without ambiguity. For example, the prefix "au:" may be replaced by a string that is specific to a product or device.

Furthermore, although authorizations are described in the context of Auth URIs that are signed, it is possible to grant the access of an object to a specific target application by the Object URI itself. For example, in the above URI specification, the object type may be "wk" (WLAN Key). When a key of this type is generated or imported, it can immediately be usable by the WLAN application on a device without a user having to grant the access explicitly. Such an application is typically provided by the system vendor of a consumer device to handle Wireless Local Area Network (WLAN) connectivity. The purpose of such implicit authorizations by object types is to allow a background system application (e.g., WLAN) to obtain access to a key without user interaction during key usage, thus improving user experience. Similar schemes can be applied to other use cases.

The authorization method described above according to an example can enable secure authorization of shared objects. However, the method can be applied to protect the integrity of data, either in memory or as files, and the resulting protection also inherits the rollback-safe property of the disclosed method. For example, when an application writes a memory region or a file, instead of simply writing data, it can perform the following:
1. Revoke any previous Auth URIs associated with the memory region or file.
2. Write data to the memory region or file, and compute the hash value of the data while writing.
3. Request to generate an Auth URI, where the object name identifies the memory region or file, and one of the attributes in the URI contains the computed hash value.
4. Store the generated Auth URI together with the memory region or file.

When an application needs to read/load such memory region or file, it can, for example, perform the following to ensure its integrity:
1a. Read file/memory content and compute its hash value.
2a. Load the Auth URI associated with the file or memory region.
3a. Compare the computed hash value and that in the Auth URI.
4a. Validate the Auth URI with authorization manager.

To see how such integrity protection works, consider an attacker that tries to modify the content of a memory region or a file, or the associated Auth URI. If any modification happens, either the hash value would not match in 3a above, or the Auth URI validation would fail in 4a. An attacker may also try to replace the file/memory and the associated Auth URI with a previous version of the file/memory, but this would not work either, since each update of the file/memory content requires revocation of previous generated Auth URI and a new Auth URI is generated instead. In other words, the scheme as described herein is also rollback-safe.

Note that this integrity protection method differs from previous methods in that at least integrity protection has typically used a long-lived protection key for MAC/signature computation, whereas, according to an example a short-lived key managed by the authorization manager is used.

The disclosed integrity protection method can be used when a file/memory is not exclusively accessible by the authorization manager. Otherwise the memory/file would be protected in the same way as the cryptographic keys in other embodiments. For example, the file could be located on a remote server, and this method allows its integrity to be verified locally. Furthermore, although integrity protection is described for the same application, it is possible to combine integrity protection with object sharing methods described above. For example, an application that writes data may be different from an application that reads the data, and the Auth URI can be used to carry both authorization information and integrity information (via the hash value).

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, a platform comprising user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus (for example, a module implementing an authorization module, a key manager, a system application and so on) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

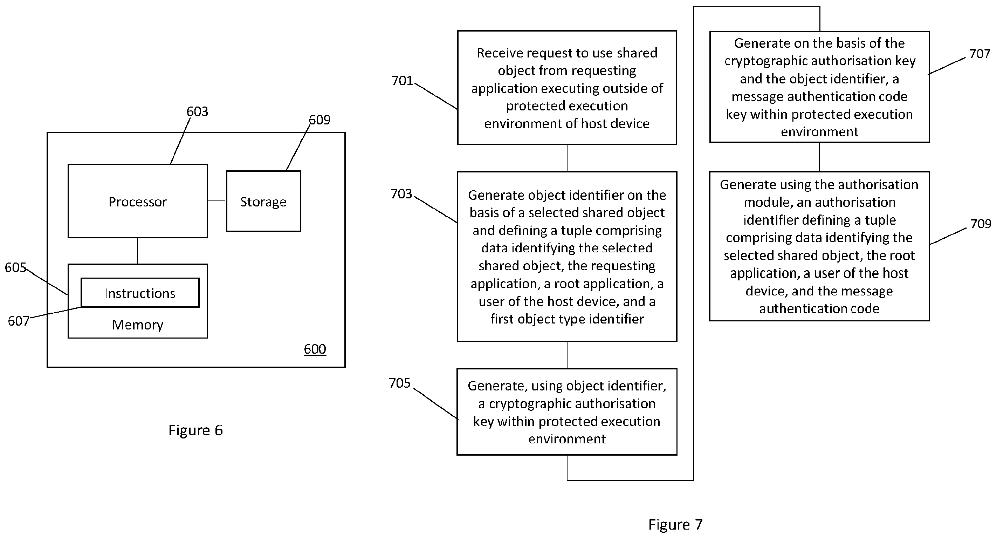

Figure 6 is a schematic representation of a machine according to an example. The machine 600 can be, e.g., a system or apparatus (e.g., the apparatus of figure 2), user equipment, or part thereof. The machine 600 comprises a processor 603, and a memory 605 to store instructions 607, executable by the processor 603. The machine comprises a storage 609 that can be used to store data representing identifiers, such as URIs described above, cryptographic keys or other shared or sharable objects, signatures, certificates and so on as described above with reference to figures 1 to 5 for example.

The instructions 607, executable by the processor 603, can cause the machine 600 to receive a request to use a shared object from a requesting application executing outside of a protected execution environment of the host device, generate, using an authorisation module coupled to the processor and defining an interface to the protected execution environment of the host device, an object identifier on the basis of a selected shared object and defining a tuple comprising data identifying the selected shared object, the requesting application, a root application, a user of the host device, and a first object type identifier, generate, using the object identifier, a cryptographic authorisation key within the protected execution environment, generate, on the basis of the cryptographic authorisation key and the object identifier, a message authentication code key within the protected execution environment, and generate, using the authorisation module, an authorisation identifier defining a tuple comprising data identifying the selected shared object, the root application, a user of the host device, and the message authentication code.

Accordingly, the machine 600 can implement a method for managing authorisation for use of a shared object in a host device.

Such machine-readable instructions may also be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

Figure 7 is a flowchart of a method according to an example. In the example of figure 7, the method can be used for managing authorisation for use of a shared object in a host device or apparatus. In block 701 a request to use a shared object is received from a requesting application executing outside of a protected execution environment of the host device. In block 703, using an authorisation module defining an interface to the protected execution environment of the host device, an object identifier is generated on the basis of a selected shared object and defining a tuple comprising data identifying the selected shared object, the requesting application, a root application, a user of the host device, and a first object type identifier. In block 705, using the object identifier, a cryptographic authorisation key is generated within the protected execution environment. In block 707, on the basis of the cryptographic authorisation key and the object identifier, a message authentication code key is generated within the protected execution environment. In block 709, using the authorisation module, an authorisation identifier defining a tuple comprising data identifying the selected shared object, the root application, a user of the host device, and the message authentication code is generated.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present invention as defined in the appended claims. The embodiments disclosed herein should be considered in all respects illustrative and not restrictive. Reference should be made to the appended claims in determining the scope of the instant disclosure.

## Claims

1. Apparatus for managing authorisation for use of a shared object in a host device, the apparatus comprising:
• a processor;
• an authorisation module coupled to the processor and defining an interface to a protected execution environment of the host device;
• a memory coupled to the processor, the memory being configured to store program code executable by the processor, the program code comprising one or more instructions, whereby to cause the apparatus to:
∘ receive a request to use a shared object from a requesting application of the host device, the requesting application operating outside of the protected execution environment;
∘ generate, using the authorisation module, an object identifier on the basis of a selected shared object and defining a tuple comprising data identifying the selected shared object, the requesting application, a root application, a user of the host device, and a first object type identifier, wherein the root application is an application operating outside of the protected execution environment and that imports or generates the shared object;
∘ generate, using the object identifier, a cryptographic authorisation key within the protected execution environment;
∘ generate, on the basis of the cryptographic authorisation key and the object identifier, a message authentication code key within the protected execution environment; and
∘ generate, using the authorisation module, an authorisation identifier defining a tuple comprising data identifying the selected shared object, the root application, the user of the host device, and the message authentication code key, and
∘ send, using the authorisation module, the authorisation identifier back to the requesting application.

2. The apparatus as claimed in claim 1, the program code comprising one or more further instructions, whereby to cause the apparatus to:
∘ generate, using the authorisation module, an access identifier comprising data identifying the selected shared object, the requesting application, the root application, the user of the host device, and a second type identifier.

3. The apparatus as claimed in claim 1 or 2, the program code comprising one or more further instructions, whereby to cause the apparatus to:
∘ generate, using the authorisation module, a set of shared objects in response to the request to use the shared object from the requesting application.

4. The apparatus as claimed in claim 3, the program code comprising one or more further instructions, whereby to cause the apparatus to:
∘ filter the set of shared objects to generate a sub-set of objects representing a list of sharable objects.

5. The apparatus as claimed in claim 3 or 4, the program code comprising one or more further instructions, whereby to cause the apparatus to:
∘ prompt the user of the host device to select the shared object from the list of sharable objects; and
∘ receive an input representing the selected shared object.

6. The apparatus as claimed in any preceding claim, the program code comprising one or more further instructions, whereby to cause the apparatus to:
∘ receive a request to perform an operation using the selected shared object;
∘ execute the operation within the protected execution environment using the selected shared object; and
∘ return data representing a result of the executed operation to the requesting application of the host device.

7. The apparatus as claimed in claim 6, the program code comprising one or more further instructions, whereby to cause the apparatus to:
∘ decode,using the authorisation module, the authorisation identifier, thereby generating decoded data; and
∘ within the protected execution environment, use the decoded data to validate the message authentication code key.

8. The apparatus as claimed in any preceding claim, the program code comprising one or more further instructions, whereby to cause the apparatus to:
∘ receive data representing a request for revocation of an authorisation for the selected shared object; and
∘ remove, within the protected execution environment, the cryptographic authorisation key associated with the selected shared object.

9. A machine-readable storage medium encoded with instructions for managing authorisation for use of a shared object in a host device, the instructions executable by a processor of the host device, whereby to cause the host device to:
• receive a request to use a shared object from a requesting application that operates outside of a protected execution environment of the host device;
• generate, using an authorisation module coupled to the processor and defining an interface to the protected execution environment of the host device, an object identifier on the basis of a selected shared object and defining a tuple comprising data identifying the selected shared object, the requesting application, a root application, a user of the host device, and a first object type identifier, wherein the root application is an application operating outside of the protected execution environment and that imports or generates the shared object;
• generate, using the object identifier, a cryptographic authorisation key within the protected execution environment;
• generate, on the basis of the cryptographic authorisation key and the object identifier, a message authentication code key within the protected execution environment; and
• generate, using the authorisation module, an authorisation identifier defining a tuple comprising data identifying the selected shared object, the root application, a user of the host device, and the message authentication code key, and
• send, using the authorisation module, the authorisation identifier back to the requesting application.

10. The machine-readable storage medium as claimed in claim 9, encoded with further instructions executable by the processor of the host device, whereby to cause the host device to:
∘ generate, using the authorisation module, an access identifier comprising data identifying the selected shared object, the requesting application, the root application, the user of the host device, and a second type identifier.

11. The machine-readable storage medium as claimed in claim 9 or 10, encoded with further instructions executable by the processor of the host device, whereby to cause the host device to:
∘ generate, using the authorisation module, a set of shared objects in response to the request to use the shared object from the requesting application.

12. A method for managing authorisation for use of a shared object in a host device, the method comprising:
• receiving (step 701) a request to use a shared object from a requesting application that operates outside of a protected execution environment of the host device;
• generating, using an authorisation module defining an interface to the protected execution environment of the host device, an object identifier on the basis of a selected shared object and defining a tuple comprising data identifying the selected shared object, the requesting application, a root application, a user of the host device, and a first object type identifier, wherein the root application is an application operating outside of the protected execution environment and that imports or generates the shared object;
• generating (step 705, steps 1.5.2 - 1.5.3), using the object identifier, a cryptographic authorisation key within the protected execution environment;
• generating (step 707, step 1.5.6), on the basis of the cryptographic authorisation key and the object identifier, a message authentication code key within the protected execution environment; and
• generating (step 709, step 1.5.7), using the authorisation module, an authorisation identifier defining a tuple comprising data identifying the selected shared object, the root application, a user of the host device, and the message authentication code key, and
• sending (steps 1.6 and 2 of figure 3), using the authorisation module, the authorisation identifier back to the requesting application.

13. The method as claimed in claim 12, further comprising:
∘ generating, using the authorisation module, an access identifier comprising data identifying the selected shared object, the requesting application, the root application, the user of the host device, and a second type identifier.

14. The method as claimed in claim 12 or 13, further comprising:
∘ generating, using the authorisation module, a set of shared objects in response to the request to use the shared object from the requesting application.

15. The method as claimed in claim 14, further comprising:
∘ filtering the set of shared objects to generate a sub-set of objects representing a list of sharable objects.

## Patentansprüche

1. Einrichtung zum Verwalten von Autorisierungen zur Verwendung eines gemeinsam genutzten Objekts in einer Host-Vorrichtung, wobei die Einrichtung umfasst:
• einen Prozessor;
• ein Autorisierungsmodul, das an den Prozessor gekoppelt ist und eine Schnittstelle zu einer geschützten Ausführungsumgebung der Host-Vorrichtung definiert;
• einen Speicher, der an den Prozessor gekoppelt ist, wobei der Speicher konfiguriert ist, um durch den Prozessor ausführbaren Programmcode zu speichern, wobei der Programmcode eine oder mehrere Anweisungen umfasst, um die Einrichtung zu veranlassen zum:
∘ Empfangen einer Anfrage, um ein gemeinsam genutztes Objekt zu verwenden, von einer anfragenden Anwendung der Host-Vorrichtung, wobei die anfragende Anwendung außerhalb der geschützten Ausführungsumgebung läuft;
∘ Erzeugen, unter Verwendung des Autorisierungsmoduls, eines Objektidentifikators auf der Grundlage eines ausgewählten gemeinsam genutzten Objekts und Definieren eines Tupels, das Daten umfasst, die das ausgewählte gemeinsam genutzte Objekt, die anfragende Anwendung, eine Root-Anwendung, einen Benutzer der Host-Vorrichtung und einen ersten Objekttypidentifikator identifizieren, wobei die Root-Anwendung eine Anwendung ist, die außerhalb der geschützten Ausführungsumgebung läuft und die das gemeinsam genutzte Objekt importiert oder erzeugt;
∘ Erzeugen, unter Verwendung des Objektidendifikators, eines kryptographischen Autorisierungsschlüssels innerhalb der geschützten Ausführungsumgebung;
∘ Erzeugen, auf der Grundlage des kryptografischen Autorisierungsschlüssels und des Objektidentifikators, eines Nachrichtenauthentifizierungscodeschlüssels innerhalb der geschützten Ausführungsumgebung; und
∘ Erzeugen, unter Verwendung des Autorisierungsmoduls, eines Autorisierungsidentifikators, der ein Tupel definiert, das Daten umfasst, die das ausgewählte gemeinsam genutzte Objekt, die Root-Anwendung, den Benutzer der Host-Vorrichtung und den Nachrichtenauthentifizierungscodeschlüssel identifizieren, und
∘ Zurücksenden, unter Verwendung des Autorisierungsmoduls, des Autorisierungsidentifikators an die anfragende Anwendung.

2. Einrichtung nach Anspruch 1, wobei der Programmcode eine oder mehrere weitere Anweisungen umfasst, um die Einrichtung zu veranlassen zum:
∘ Erzeugen, unter Verwendung des Autorisierungsmoduls, eines Zugriffsidentifikators, der Daten umfasst, die das ausgewählte gemeinsam genutzte Objekt, die anfragende Anwendung, die Root-Anwendung, den Benutzer der Host-Vorrichtung und einen zweiten Typidentifikator identifizieren.

3. Einrichtung nach Anspruch 1 oder 2, wobei der Programmcode eine oder mehrere weitere Anweisungen umfasst, um die Einrichtung zu veranlassen zum:
∘ Erzeugen, unter Verwendung des Autorisierungsmoduls, eines Satzes von gemeinsam genutzten Objekten als Reaktion auf die Anfrage, um das gemeinsam genutzte Objekt zu verwenden, von der anfragenden Anwendung.

4. Einrichtung nach Anspruch 3, wobei der Programmcode eine oder mehrere weitere Anweisungen umfasst, um die Einrichtung zu veranlassen zum:
∘ Filtern des Satzes von gemeinsam genutzten Objekten, um einen Teilsatz von Objekten zu erzeugen, der eine Liste von gemeinsam nutzbaren Objekten darstellt.

5. Einrichtung nach Anspruch 3 oder 4, wobei der Programmcode eine oder mehrere weitere Anweisungen umfasst, um die Einrichtung zu veranlassen zum:
∘ Auffordern des Benutzers der Host-Vorrichtung, das gemeinsam genutzte Objekt aus der Liste von gemeinsam nutzbaren Objekten auszuwählen; und
∘ Empfangen einer Eingabe, die das ausgewählte gemeinsam genutzte Objekt darstellt.

6. Einrichtung nach einem vorstehenden Anspruch, wobei der Programmcode eine oder mehrere weitere Anweisungen umfasst, um die Vorrichtung zu veranlassen zum:
∘ Empfangen einer Anfrage, eine Operation unter Verwendung des ausgewählten gemeinsam genutzten Objekts durchzuführen;
∘ Ausführen der Operation innerhalb der geschützten Ausführungsumgebung unter Verwendung des ausgewählten gemeinsam genutzten Objekts; und
∘ Zurückgeben von Daten, die ein Ergebnis der ausgeführten Operation darstellen, an die anfragende Anwendung der Host-Vorrichtung.

7. Einrichtung nach Anspruch 6, wobei der Programmcode eine oder mehrere weitere Anweisungen umfasst, um die Einrichtung zu veranlassen zum:
∘ Decodieren, unter Verwendung des Autorisierungsmoduls, des Autorisierungsidentifikators, wodurch decodierte Daten erzeugt werden; und
∘ innerhalb der geschützten Ausführungsumgebung, Verwenden der decodierten Daten, um den Nachrichtenauthentifizierungscodeschlüssel zu validieren.

8. Einrichtung nach einem vorstehenden Anspruch, wobei der Programmcode eine oder mehrere weitere Anweisungen umfasst, um die Vorrichtung zu veranlassen zum:
∘ Empfangen von Daten, die eine Anfrage für einen Widerruf einer Autorisierung für das ausgewählte gemeinsam genutzte Objekt darstellen; und
∘ Entfernen, innerhalb der geschützten Ausführungsumgebung, des kryptografischen Autorisierungsschlüssels, der dem ausgewählten gemeinsam genutzten Objekt zugeordnet ist.

9. Maschinenlesbares Speicherungsmedium, auf dem Anweisungen zum Verwalten von Autorisierungen zur Verwendung eines gemeinsam genutzten Objekts in einer Host-Vorrichtung codiert sind, wobei die Anweisungen durch einen Prozessor der Host-Vorrichtung ausführbar sind, um die Host-Vorrichtung zu veranlassen zum:
• Empfangen einer Anfrage, um ein gemeinsam genutztes Objekt zu verwenden, von einer anfragenden Anwendung, die außerhalb einer geschützten Ausführungsumgebung der Host-Vorrichtung läuft;
• Erzeugen, unter Verwendung eines Autorisierungsmoduls, das an den Prozessor gekoppelt ist und eine Schnittstelle zu der geschützten Ausführungsumgebung der Host-Vorrichtung definiert, eines Objektidentifikators auf der Grundlage eines ausgewählten gemeinsam genutzten Objekts und Definieren eines Tupels, das Daten umfasst, die das ausgewählte gemeinsam genutzte Objekt, die anfragende Anwendung, eine Root-Anwendung, einen Benutzer der Host-Vorrichtung und einen ersten Objekttypidentifikator identifizieren, wobei die Root-Anwendung eine Anwendung ist, die außerhalb der geschützten Ausführungsumgebung läuft und die das gemeinsam genutzte Objekt importiert oder erzeugt;
• Erzeugen, unter Verwendung des Objektidentifikators, eines kryptografischen Autorisierungsschlüssels innerhalb der geschützten Ausführungsumgebung;
• Erzeugen, auf der Grundlage des kryptografischen Autorisierungsschlüssels und des Objektidentifikators, eines Nachrichtenauthentifizierungscodeschlüssels innerhalb der geschützten Ausführungsumgebung; und
• Erzeugen, unter Verwendung des Autorisierungsmoduls, eines Autorisierungsidentifikators, der ein Tupel definiert, das Daten umfasst, die das ausgewählte gemeinsam genutzte Objekt, die Root-Anwendung, einen Benutzer der Host-Vorrichtung und den Nachrichtenauthentifizierungscodeschlüssel identifizieren, und
• Zurücksenden, unter Verwendung des Autorisierungsmoduls, des Autorisierungsidentifikators an die anfragende Anwendung.

10. Maschinenlesbares Speicherungsmedium nach Anspruch 9, codiert mit weiteren Anweisungen, die durch den Prozessor der Host-Vorrichtung ausführbar sind, um die Host-Vorrichtung zu veranlassen zum:
∘ Erzeugen, unter Verwendung des Autorisierungsmoduls, eines Zugriffsidentifikators, der Daten umfasst, die das ausgewählte gemeinsam genutzte Objekt, die anfragende Anwendung, die Root-Anwendung, den Benutzer der Host-Vorrichtung und einen zweiten Typidentifikator identifizieren.

11. Maschinenlesbares Speicherungsmedium nach Anspruch 9 oder 10, codiert mit weiteren Anweisungen, die durch den Prozessor der Host-Vorrichtung ausführbar sind, um die Host-Vorrichtung zu veranlassen zum:
∘ Erzeugen, unter Verwendung des Autorisierungsmoduls, eines Satzes von gemeinsam genutzten Objekten als Reaktion auf die Anfrage, um das gemeinsam genutzte Objekt zu verwenden, von der anfragenden Anwendung.

12. Verfahren zum Verwalten von Autorisierungen zur Verwendung eines gemeinsam genutzten Objekts in einer Host-Vorrichtung, wobei das Verfahren umfasst:
• Empfangen (Schritt 701) einer Anfrage, um ein gemeinsam genutztes Objekt zu verwenden, von einer anfragenden Anwendung, die außerhalb einer geschützten Ausführungsumgebung der Host-Vorrichtung läuft;
• Erzeugen, unter Verwendung eines Autorisierungsmoduls, das eine Schnittstelle zu der geschützten Ausführungsumgebung der Host-Vorrichtung definiert, eines Objektidentifikators auf der Grundlage eines ausgewählten gemeinsam genutzten Objekts und Definieren eines Tupels, das Daten umfasst, die das ausgewählte gemeinsam genutzte Objekt, die anfragende Anwendung, eine Root-Anwendung, einen Benutzer der Host-Vorrichtung und einen ersten Objekttypidentifikator identifizieren, wobei die Root-Anwendung eine Anwendung ist, die außerhalb der geschützten Ausführungsumgebung läuft und die das gemeinsam genutzte Objekt importiert oder erzeugt;
• Erzeugen (Schritt 705, Schritte 1.5.2 bis 1.5.3), unter Verwendung des Objektidentifikators, eines kryptografischen Autorisierungsschlüssels innerhalb der geschützten Ausführungsumgebung;
• Erzeugen (Schritt 707, Schritt 1.5.6), auf der Grundlage des kryptografischen Autorisierungsschlüssels und des Objektidentifikators, eines Nachrichtenauthentifizierungscodeschlüssels innerhalb der geschützten Ausführungsumgebung; und
• Erzeugen (Schritt 709, Schritt 1.5.7), unter Verwendung des Autorisierungsmoduls, eines Autorisierungsidentifikators, der ein Tupel definiert, das Daten umfasst, die das ausgewählte gemeinsam genutzte Objekt, die Root-Anwendung, einen Benutzer der Host-Vorrichtung und den Nachrichtenauthentifizierungscodeschlüssel identifizieren, und
• Zurücksenden (Schritte 1.6 und 2 von Figur 3), unter Verwendung des Autorisierungsmoduls, des Autorisierungsidentifikators an die anfragende Anwendung.

13. Verfahren nach Anspruch 12, das ferner umfasst:
∘ Erzeugen, unter Verwendung des Autorisierungsmoduls, eines Zugriffsidentifikators, der Daten umfasst, die das ausgewählte gemeinsam genutzte Objekt, die anfragende Anwendung, die Root-Anwendung, den Benutzer der Host-Vorrichtung und einen zweiten Typidentifikator identifizieren.

14. Verfahren nach Anspruch 12 oder 13, das ferner umfasst:
∘ Erzeugen, unter Verwendung des Autorisierungsmoduls, eines Satzes von gemeinsam genutzten Objekten als Reaktion auf die Anfrage, um ein gemeinsam genutztes Objekt zu verwenden, von der anfragenden Anwendung.

15. Verfahren nach Anspruch 14, das ferner umfasst:
∘ Filtern des Satzes von gemeinsam genutzten Objekten, um einen Teilsatz von Objekten zu erzeugen, der eine Liste von gemeinsam nutzbaren Objekten darstellt.

## Revendications

1. Appareil de gestion d'autorisation d'utilisation d'un objet partagé dans un dispositif hôte, l'appareil comprenant :
• un processeur ;
• un module d'autorisation couplé au processeur et définissant une interface avec un environnement d'exécution protégé du dispositif hôte ;
• une mémoire couplée au processeur, la mémoire étant configurée pour stocker un code de programme exécutable par le processeur, le code de programme comprenant une ou plusieurs instructions, de manière à amener l'appareil à :
∘ recevoir une demande d'utilisation d'un objet partagé en provenance d'une application de demande du dispositif hôte, l'application de demande fonctionnant en dehors de l'environnement d'exécution protégé ;
∘ générer, à l'aide du module d'autorisation, un identifiant d'objet sur la base d'un objet partagé sélectionné et définissant un tuple comprenant des données identifiant l'objet partagé sélectionné, l'application de demande, une application racine, un utilisateur du dispositif hôte, et un premier identifiant de type d'objet, dans lequel l'application racine est une application fonctionnant en dehors de l'environnement d'exécution protégé et qui importe ou génère l'objet partagé ;
∘ générer, à l'aide de l'identifiant d'objet, une clé d'autorisation cryptographique au sein de l'environnement d'exécution protégé ;
∘ générer, sur la base de la clé d'autorisation cryptographique et de l'identifiant d'objet, une clé de code d'authentification de message au sein de l'environnement d'exécution protégé ; et
∘ générer, à l'aide du module d'autorisation, un identifiant d'autorisation définissant un tuple comprenant des données identifiant l'objet partagé sélectionné, l'application racine, l'utilisateur du dispositif hôte, et la clé de code d'authentification de message, et
∘ renvoyer, à l'aide du module d'autorisation, l'identifiant d'autorisation à l'application de demande.

2. Appareil selon la revendication 1, le code de programme comprenant une ou plusieurs instructions supplémentaires, de manière à amener l'appareil à :
∘ générer, à l'aide du module d'autorisation, un identifiant d'accès comprenant des données identifiant l'objet partagé sélectionné, l'application de demande, l'application racine, l'utilisateur du dispositif hôte, et un identifiant de second type.

3. Appareil selon la revendication 1 ou 2, le code de programme comprenant une ou plusieurs instructions supplémentaires, de manière à amener l'appareil à :
∘ générer, à l'aide du module d'autorisation, un ensemble d'objets partagés en réponse à la demande d'utilisation de l'objet partagé en provenance de l'application de demande.

4. Appareil selon la revendication 3, le code de programme comprenant une ou plusieurs instructions supplémentaires, de manière à amener l'appareil à :
∘ filtrer l'ensemble d'objets partagés afin de générer un sous-ensemble d'objets représentant une liste d'objets partageables.

5. Appareil selon la revendication 3 ou 4, le code de programme comprenant une ou plusieurs instructions supplémentaires, de manière à amener l'appareil à :
∘ inviter l'utilisateur du dispositif hôte à sélectionner l'objet partagé dans la liste d'objets partageables ; et
∘ recevoir une entrée représentant l'objet partagé sélectionné.

6. Appareil selon l'une quelconque revendication précédente, le code de programme comprenant une ou plusieurs instructions supplémentaires, de manière à amener l'appareil à :
∘ recevoir une demande de réalisation d'une opération à l'aide de l'objet partagé sélectionné ;
∘ exécuter l'opération au sein de l'environnement d'exécution protégé à l'aide de l'objet partagé sélectionné ; et
∘ renvoyer des données représentant un résultat de l'opération exécutée à l'application de demande du dispositif hôte.

7. Appareil selon la revendication 6, le code de programme comprenant une ou plusieurs instructions supplémentaires, de manière à amener l'appareil à :
∘ décoder, à l'aide du module d'autorisation, l'identifiant d'autorisation, permettant ainsi de générer des données décodées ; et
∘ au sein de l'environnement d'exécution protégé, utiliser les données décodées afin de valider la clé de code d'authentification de message.

8. Appareil selon l'une quelconque revendication précédente, le code de programme comprenant une ou plusieurs instructions supplémentaires, de manière à amener l'appareil à :
∘ recevoir des données représentant une demande de révocation d'une autorisation pour l'objet partagé sélectionné ; et
∘ supprimer, au sein de l'environnement d'exécution protégé, la clé d'autorisation cryptographique associée à l'objet partagé sélectionné.

9. Support de stockage lisible par machine, codé avec des instructions permettant de gérer une autorisation d'utilisation d'un objet partagé dans un dispositif hôte, les instructions étant exécutables par un processeur du dispositif hôte, de manière à amener le dispositif hôte à :
• recevoir une demande d'utilisation d'un objet partagé en provenance d'une application de demande qui fonctionne en dehors d'un environnement d'exécution protégé du dispositif hôte ;
• générer, à l'aide d'un module d'autorisation couplé au processeur et définissant une interface avec l'environnement d'exécution protégé du dispositif hôte, un identifiant d'objet sur la base d'un objet partagé sélectionné et définissant un tuple comprenant des données identifiant l'objet partagé sélectionné, l'application de demande, une application racine, un utilisateur du dispositif hôte, et un premier identifiant de type d'objet, dans lequel l'application racine est une application fonctionnant en dehors de l'environnement d'exécution protégé et qui importe ou génère l'objet partagé ;
• générer, à l'aide de l'identifiant d'objet, une clé d'autorisation cryptographique au sein de l'environnement d'exécution protégé ;
• générer, sur la base de la clé d'autorisation cryptographique et de l'identifiant d'objet, une clé de code d'authentification de message au sein de l'environnement d'exécution protégé ; et
• générer, à l'aide du module d'autorisation, un identifiant d'autorisation définissant un tuple comprenant des données identifiant l'objet partagé sélectionné, l'application racine, un utilisateur du dispositif hôte, et la clé de code d'authentification de message, et
• renvoyer, à l'aide du module d'autorisation, l'identifiant d'autorisation à l'application de demande.

10. Support de stockage lisible par machine selon la revendication 9, codé avec des instructions supplémentaires exécutables par le processeur du dispositif hôte, de manière à amener le dispositif hôte à :
∘ générer, à l'aide du module d'autorisation, un identifiant d'accès comprenant des données identifiant l'objet partagé sélectionné, l'application de demande, l'application racine, l'utilisateur du dispositif hôte, et un identifiant de second type.

11. Support de stockage lisible par machine selon la revendication 9 ou 10, codé avec des instructions supplémentaires exécutables par le processeur du dispositif hôte, de manière à amener le dispositif hôte à :
∘ générer, à l'aide du module d'autorisation, un ensemble d'objets partagés en réponse à la demande d'utilisation de l'objet partagé en provenance de l'application de demande.

12. Procédé de gestion d'autorisation d'utilisation d'un objet partagé dans un dispositif hôte, le procédé comprenant :
• la réception (étape 701) d'une demande d'utilisation d'un objet partagé en provenance d'une application de demande qui fonctionne en dehors d'un environnement d'exécution protégé du dispositif hôte ;
• la génération, à l'aide d'un module d'autorisation définissant une interface avec l'environnement d'exécution protégé du dispositif hôte, d'un identifiant d'objet sur la base d'un objet partagé sélectionné et définissant un tuple comprenant des données identifiant l'objet partagé sélectionné, l'application de demande, une application racine, un utilisateur du dispositif hôte, et un premier identifiant de type d'objet, dans lequel l'application racine est une application fonctionnant en dehors de l'environnement d'exécution protégé et qui importe ou génère l'objet partagé ;
• la génération (étape 705, étapes 1.5.2 - 1.5.3), à l'aide de l'identifiant d'objet, d'une clé d'autorisation cryptographique au sein de l'environnement d'exécution protégé ;
• la génération (étape 707, étape 1.5.6), sur la base de la clé d'autorisation cryptographique et de l'identifiant d'objet, d'une clé de code d'authentification de message au sein de l'environnement d'exécution protégé ; et
• la génération (étape 709, étape 1.5.7), à l'aide du module d'autorisation, d'un identifiant d'autorisation définissant un tuple comprenant des données identifiant l'objet partagé sélectionné, l'application racine, un utilisateur du dispositif hôte, et la clé de code d'authentification de message, et
• le renvoi (étapes 1.6 et 2 de la figure 3), à l'aide du module d'autorisation, de l'identifiant d'autorisation à l'application de demande.

13. Procédé selon la revendication 12, comprenant en outre :
∘ la génération, à l'aide du module d'autorisation, d'un identifiant d'accès comprenant des données identifiant l'objet partagé sélectionné, l'application de demande, l'application racine, l'utilisateur du dispositif hôte, et un identifiant de second type.

14. Procédé selon la revendication 12 ou 13, comprenant en outre :
∘ la génération, à l'aide du module d'autorisation, d'un ensemble d'objets partagés en réponse à la demande d'utilisation de l'objet partagé en provenance de l'application de demande.

15. Procédé selon la revendication 14, comprenant en outre :
∘ le filtrage de l'ensemble d'objets partagés pour générer un sous-ensemble d'objets représentant une liste d'objets partageables.
